# EUROPÄISCHE PATENTSCHRIFT

(11) **EP 2 285 739 B1**
(45) Veröffentlichungstag und Bekanntmachung des Hinweises auf die Patenterteilung: **04.07.2012**
(21) Anmeldenummer: 09757168.1
(22) Anmeldetag: 15.05.2009
(51) Int. Cl.: C01B 21/28, C01B 21/40

(54) **SPERRUNG DES NO-KOMPRESSORS UND DES RESTGASEXPANDERS IN EINER SALPETERSÄUREANLAGE**
SEALING THE NO COMPRESSOR AND THE RESIDUAL GAS EXPANDER IN A NITRIC ACID PLANT
BLOCAGE DU COMPRESSEUR DE NO ET DU DÉTENDEUR DE GAZ RÉSIDUEL DANS UNE INSTALLATION D'ACIDE NITRIQUE

(30) Priorität: 06.06.2008 DE 102008027232
(43) Veröffentlichungstag der Anmeldung: 23.02.2011
(73) Patentinhaber: ThyssenKrupp Uhde GmbH, 44141 Dortmund (DE)
(72) Erfinder: MAURER, Rainer, 58332 Schwelm (DE); BIRKE, Daniel, 44141 Dortmund (DE); JOCHMANN, Egon, 45731 Waltrop (DE)
(86) Internationale Anmeldenummer: PCT/EP2009/003471
(87) Internationale Veröffentlichungsnummer: WO 2009/146785

(56) Entgegenhaltungen:
- EP-A- 0 704 603
- DE-A1- 3 014 673
- DE-A1-102005 023 161

## Beschreibung

Die Erfindung betrifft ein Verfahren sowie eine entsprechende Vorrichtung zur Sperrung des NO-Kompressors und des Restgasexpanders mittels Restgas in einer Anlage zur Herstellung von Salpetersäure nach dem Zweidruckverfahren. Dabei befindet sich die erste Sperrkammer jeweils neben dem gasbeaufschlagten Laufrad des Kompressors und des Expanders. Dabei wird ein Teil des Restgases nach dem Wärmetauscher abgezogen und in 2 Teilströme aufgeteilt, von denen der erste Teilstrom in die erste Sperrkammer des NO-Kompressors und der zweite Teilstrom in die erste Sperrkammer des Restgasexpanders geleitet wird. Dort wird der größte Teil des Restgases der beiden Teilströme aufgrund des höheren Druckniveaus durch die das gasbeaufschlagte Laufrad von der ersten Sperrkammer abtrennenden Labyrinthdichtung zum gasbeaufschlagten Laufrad gelangen. Aufgrund von Undichtigkeiten der Labyrinthe kann Restgas von der ersten Sperrkammer in die zweite Sperrkammer gelangen. Dieses Restgas wird jeweils in den Abgasstrom des Restgasexpanders geleitet.

Salpetersäure ist ein wichtiger Grundstoff der chemischen Industrie und dient beispielsweise als Grundlage zur Herstellung von Düngemittel, Explosivstoffen, sowie zur Nitrierung von organischen Stoffen bei der Herstellung von Farbstoffen und Desinfektionsmitteln.

Seit Anfang des 20. Jahrhunderts wird Salpetersäure nach dem sogenannten Ostwaldverfahren hergestellt, auf dem bis heute die industrielle Herstellung im Großmaßstab beruht. Bei dieser Reaktion handelt es sich um eine katalytische Oxidation von Ammoniak. Das entstehende Stickstoffmonoxid reagiert zu Stickstoffdioxid, aus dem durch Reaktion mit Wasser Salpetersäure entsteht, die in Rieseltürmen abgetrennt werden kann. Dieser Prozess ist in der Publikation "Anorganische Stickstoffverbindungen" von Mundo/Weber, Carl Hanser Verlag München Wien 1982, sowie in der Patentschrift WO 01/68520 A1 beschrieben.

Dabei kann die Herstellung von Salpetersäure im Eindruck- oder im Zweidruckverfahren hergestellt werden. Im Eindruckverfahren wird sowohl die Verbrennung als auch die Absorption bei Mitteldruck (5 bar) oder Hochdruck (> 8 bar) durchgeführt. Das der hier beschriebenen Erfindung zugrundeliegende Zweidruckverfahren unterscheidet sich vom Eindruckverfahren, indem die Verbrennung unter Mitteldruck und die Absorption unter Hochdruck durchgeführt wird.

Der Vorteil des Zweidruckverfahrens liegt darin, dass die Druckstufen den jeweiligen Reaktionen angepasst sind und somit sowohl eine optimale Verbrennungsausbeute als auch eine kompakte Absorption gewährleistet wird.

Das nicht absorbierte Restgas wird dabei nach dem Durchlaufen von Vorwärmestufen einem Restgasexpander zugeführt, um es zur Gewinnung von Verdichterarbeit auf Umgebungsdruck zu entspannen. Die DE 102 07 627 A1 beschreibt ein Verfahren, bei dem zum Beispiel Arbeit aus der Restgasexpansion gewonnen wird, indem mindestens zwei Expansionsstufen zum Einsatz kommen, wobei zwischen den Expansionsstufen mindestens eine Einrichtung zur Aufheizung des zuvor entspannten Restgases angeordnet ist. Die daraus gewonnene Arbeit wird dann verwendet, um einen oder mehrere Turboverdichter anzutreiben.

Nach dem Stand der Technik wird bei diesem Verfahren für die Sperrung des NO-Kompressors und des Restgasexpanders in einer Anlage zur Herstellung von Salpetersäure nach dem Zweidruckverfahren Sekundärluft verwendet. Bei der Sekundärluft handelt es sich um komprimierte Luft, die der Prozessluft entnommen und mit einem Wärmetauscher auf die zur Sperrung der Maschine erforderliche Temperatur abgekühlt wird.

Dabei wird die Sekundärluft auf verschleißfreie hydraulische Wellendichtungen geleitet, die wenig Wartung erforderlich machen. Mechanische Gleitringdichtungen oder stopfbuchslose Pumpen erfordern dagegen eine aufwendigere Filterung.

Oftmals ist der Differenzdruck der zur Sperrung der Geräte verwendeten Sekundärluft gegenüber dem Eintrittsdruck des NO-Gases zu gering, wodurch eine sichere Sperrung der Geräte nicht gewährleistet ist. Aus diesem Grund wird aufgrund des höheren Drucks häufig auch Instrumentenluft oder Anlagenluft, was ungetrockneter Instrumentenluft entspricht, verwendet.

Bekannt ist zudem ein Kompressor für nitrose Gase, welcher Labyrinthdichtungen sowie Zu- und Ableitungen aufweist und dient hauptsächlich dem Ziel der Entfernung und der Verhinderung von kristallinen Salzabscheidungen in Verdichtern für nitrose Gase zu begegnen, indem durch eine spezielle Injektion von äußerem Wasserdampf eine geeignete Steigerung des Wasserdampfdrucks erreicht wird. Das Verfahren und die Vorrichtung dazu wird in der DE 3014673 C2 beschrieben.

In der DE 3835341 A1 ist ein Kreiselverdichter mit horizontaler Teilungsebene für nitrose Gase mit Labyrinthdichtungen beschrieben. Ziel ist es, gleiche Drücke in den Ringräumen zwischen den Verdichtungsstufen sicherzustellen und Überströmungen des Arbeitsmediums zu vermeiden und dabei die Betriebssicherheit zu erhöhen.

Eine weitere Ausgestaltung einer Wellendichtung zwecks Verminderung von Leckagen und Korrosionsverminderung für einen Getriebeexpander oder einen Getriebekompressor ist in der DE 102005041003 A1 offenbart. Insbesondere ist diese Wellendichtung dadurch gekennzeichnet, dass die Dichtungsspitzen in drei hintereinander liegenden Dichtungsabschnitten angeordnet sind, dass zwischen jeweils zwei Dichtungsabschnitten eine Ringkammer angeordnet ist, dass die dem Innenraum des Getriebeexpanders oder -kompressors zugewandte Ringkammer mit einer Zuführung eines Sperrgases ausgerüstet ist, dessen Druck höher als der Druck im Innenraum des Getriebeexpanders oder -kompressors ist, und dass die dem Innenraum des Getriebeexpanders oder -kompressors abgewandte Ringkammer mit einer Absaugung des Sperrgases versehen ist.

Weitere Beispiele für Wellendichtungen in Kompressoren und Expandern sind in der GB 1582209 A und der US 20050058533 A1 aufgezeigt. Letztere betrifft ein duales Labyrinthdichtungssystem, das zwei ineinander angeordnete Kammern besitzt, wobei die Dichtwirkung durch ein Hochdruckdichtmedium erreicht wird, das entgegengesetzt zu eventuellen Leckströmen fließt. In der GB 1582209 wird verdichtete Luft als Dichtmedium in einem Kompressor verwendet, um Leckströme des Hauptgasstromes im Kompressor zwischen Kompressorrad und stationären Teilen des Kompressors zu vermeiden.

Allerdings sind auch bei den genannten Ausführungsformen keine optimalen Bedingungen zur sicheren Gewährleistung der erforderlichen Sperrung der Geräte gegeben.

Die Aufgabe der Erfindung besteht deshalb darin, die Sperrung des NO-Kompressors und des Restgasexpanders in einer Anlage zur Herstellung von Salpetersäure derart zu gestalten, dass eine sichere Sperrung der Geräte gewährleistet ist.

Dies wird erreicht durch ein Verfahren und eine Anlage zur Sperrung des NO-Kompressors und des Restgasexpanders in einer Anlage zur Herstellung von Salpetersäure nach dem Zweidruckverfahren, enthaltend einen Niederdruckteil, einen NO-Kompressor, wobei die Wellen des NO-Kompressors mittels mindestens 2 Sperrkammern gegenüber den gasbeaufschlagten Teilen gesperrt sind, einen Hochdruckteil mit Oxidation und Absorption, mindestens einen Wärmetauscher und einen Restgasexpander, wobei die Wellen des Restgasexpanders mittels mindestens 2 Sperrkammern gegenüber den gasbeaufschlagten Teilen gesperrt sind, und die Sperrkammern sämtlich Labyrinthdichtungen aufweisen. In den Niederdruckteil der Salpetersäureanlage werden Ammoniak und komprimierte Luft geleitet und dort wird Ammoniak mittels eines Katalysators zu NO und Wasser oxidiert, das entstehende NO wird teilweise zu NO₂ oxidiert und das NO- und NO₂-gesättigte Gas wird in den NO-Kompressor geleitet. Das komprimierte NO- und NO₂-gesättigte Gas wird in das Hochdruckteil der Salpetersäureanlage geleitet, wo eine Oxidation des restlichen NO zu NO₂ erfolgt, gefolgt von einer Absorption von Stickstoffdioxid zu Salpetersäure. Das Restgas wird mindestens über einen Wärmetauscher in den Restgasexpander geleitet. Die erste Sperrkammer befindet sich jeweils neben dem gasbeaufschlagten Laufrad des Kompressors bzw. des Expanders und ein Teil des Restgases wird nach dem Wärmetauscher abgezogen und in 2 Teilströme aufgeteilt, von denen der erste Teilstrom in die erste Sperrkammer des NO-Kompressors geleitet wird, und von denen der zweite Teilstrom in die erste Sperrkammer des Restgasexpanders geleitet wird, und der größte Teil des Restgases der beiden Teilströme aufgrund des höheren Druckniveaus durch die das gasbeaufschlagte Laufrad von der ersten Sperrkammer abtrennenden Labyrinthdichtung zum gasbeaufschlagten Laufrad gelangt und das durch Undichtigkeiten der Labyrinthe aus der jeweils ersten Sperrkammer in die jeweils zweite Sperrkammer gelangende Restgas in den Abgasstrom des Restgasexpanders geleitet wird.

In einer Ausgestaltung des Verfahrens wird das für die Sperrkammern benötigte Restgas hinter dem Wärmetauscher dem Restgasstrang oder aus einer Zwischenstufe des Restgasexpanders mit der benötigten Temperatur und dem benötigten Überdruck entnommen.

Beispielhaft können etwa 1200 Nm³/h Restgas hinter dem Wärmetauscher oder aus einer Zwischenstufe des Restgasexpanders bei einem Druck von 3,3 bar g abgezogen werden. Diese Angaben beziehen sich auf eine Anlagengröße von 700 - 1500 Tagestonnen, berechnet auf 100%ige Salpetersäure.

In einer weiteren Ausgestaltung des Verfahrens wird vorgesehen, dass zur Dichtung des NO-Kompressors und/oder des Restgasexpanders eine dritte Sperrkammer eingesetzt wird, die mit Luft als Sperrgas betrieben wird und eine zusätzliche Abdichtung bewirkt.

Die entsprechende Vorrichtung zur Sperrung des NO-Kompressors und des Restgasexpanders in einer Anlage zur Herstellung von Salpetersäure nach dem Zweidruckverfahren umfasst einen Niederdruckteil, einen NO-Kompressor, wobei die Wellen des NO-Kompressors mittels mindestens zwei Sperrkammern gegenüber den gasbeaufschlagten Teilen gesperrt sind und die Sperrkammern sämtlich Labyrinthdichtugnen aufweisen, einen Hochdruckteil, mindestens einen Wärmetauscher, einen Restgasexpander, wobei die Wellen des Restgasexpanders mittels mindestens zwei Sperrkammern gegenüber den gasbeaufschlagten Teilen gesperrt sind und die Sperrkammern sämtlich Labyrinthdichtungen aufweisen, eine Vorrichtung zur Einleitung entstandenen NO-Gases in den NO-Kompressor, eine Vorrichtung zur Einleitung, mit der das NO-Gas in das Hochdruckteil der Salpetersäureanlage gelangt, eine Vorrichtung, mit der das Restgas über einen Wärmeaustauscher in den Restgasexpander geleitet wird, eine Vorrichtung zum Abzug und zur Aufteilung eines Teils des Restgases in 2 Teilströme, Zuleitungen der beiden Teilströme zu den jeweils ersten Sperrkammern von Restgasexpander und NO-Kompressor, wobei sich die jeweils erste Sperrkammer, in die das Restgas geleitet wird, jeweils neben dem Laufrad, das von Labyrinthen abgedichtet wird, befindet, und Ableitungen von den zweiten Sperrkammern in den Produktgasstrom des Restgasexpanders vorgesehen sind.

Zusätzlich kann der Erfindungsgegenstand so ausgelegt sein, dass zur Dichtung des NO-Kompressors und/oder zur Dichtung des Restgasexpanders eine dritte Sperrkammer vorgesehen wird.

Die Erfindung wird nachstehend beispielhaft anhand von 2 Figuren näher erläutert:
- Fig. 1:: Eine erfindungsgemäße Verfahrensskizze des Prozesses der Salpetersäureherstellung.
- Fig. 2:: Eine erfindungsgemäße Ausführung einer Sperrkammervorrichtung

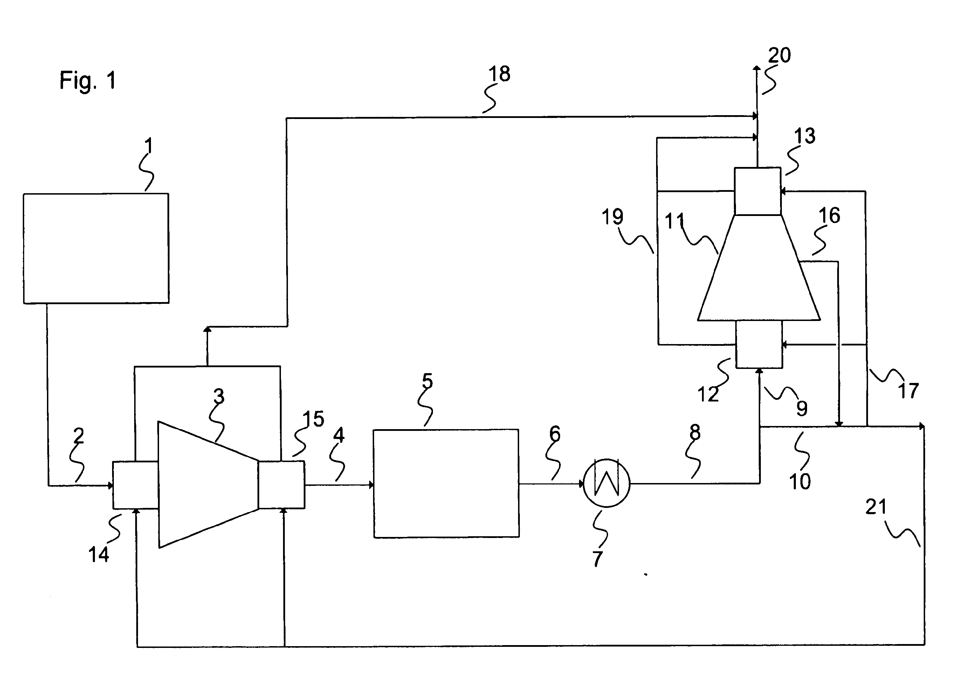

Fig. 1 zeigt ein Niederdruckteil (1) einer Anlage zur Herstellung von Salpetersäure, in dem mittels eines Katalysators und Luft Ammoniak zu NO und Wasser oxidiert wird und das entstehende NO teilweise zu NO₂ oxidiert wird. Daraus resultiert das NO-Gas (2), das in einen NO-Kompressor (3) geleitet wird. Von dort aus wird das komprimierte NO-Gas (4) in das Hochdruckteil (5) überführt. Dort erfolgen die Oxidation von NO zu NO₂ und die Absorption von NO₂ zu HNO₃. Das dabei entstehende Restgas (6), wird über einen Wärmeaustauscher (7) geleitet. Das aus dem Wärmetauscher (7) resultierende Restgas (8) wird vor Erreichen des Restgasexpanders (11) in zwei Restgasteilströme (9) und (10) aufgeteilt. Dabei wird Teilstrom (9) in den Restgasexpander geleitet und Teilstrom (10) wird erneut in zwei Teilströme aufgeteilt. Davon wird der erste Teilstrom (17) in die jeweiligen ersten Sperrkammern (22) der gasbeaufschlagten Wellen (12, 13) des Restgasexpanders (11) geleitet während der zweite Teilstrom (21), der aus der Aufteilung von Teilstrom (10) entsteht, in die jeweiligen ersten Sperrkammern (22) der gasbeaufschlagten Wellen (14,15) des NO-Kompressors (3) geleitet wird. Alternativ kann das Restgas zur Aufteilung in die beiden Teilströme auch einer Zwischenstufe des Restgasexpanders entnommen werden (16). Aus der Teilung von Restgasstrom (16) resultieren Restgasstrom (21), der in die jeweiligen ersten Sperrkammern (22) der gasbeaufschlagten Wellen (14, 15) des NO-Kompressors (3) gelangt sowie Restgasstrom (17), der in die ersten Sperrkammern (22) der gasbeaufschlagten Wellen (12, 13) des Restgasexpanders (11) geführt wird. Das durch Undichtigkeiten aus der jeweils ersten Sperrkammer (22) in die jeweils zweite Sperrkammer (23) gelangende Restgas (18) des NO-Kompressors (3) wird mit dem aus der jeweils ersten Sperrkammer (22) in die jeweils zweite Sperrkammer (23) gelangende Restgas (19) des Restgasexpanders (11) in den Produktstrom (20) des Abgasexpanders (11) geleitet.

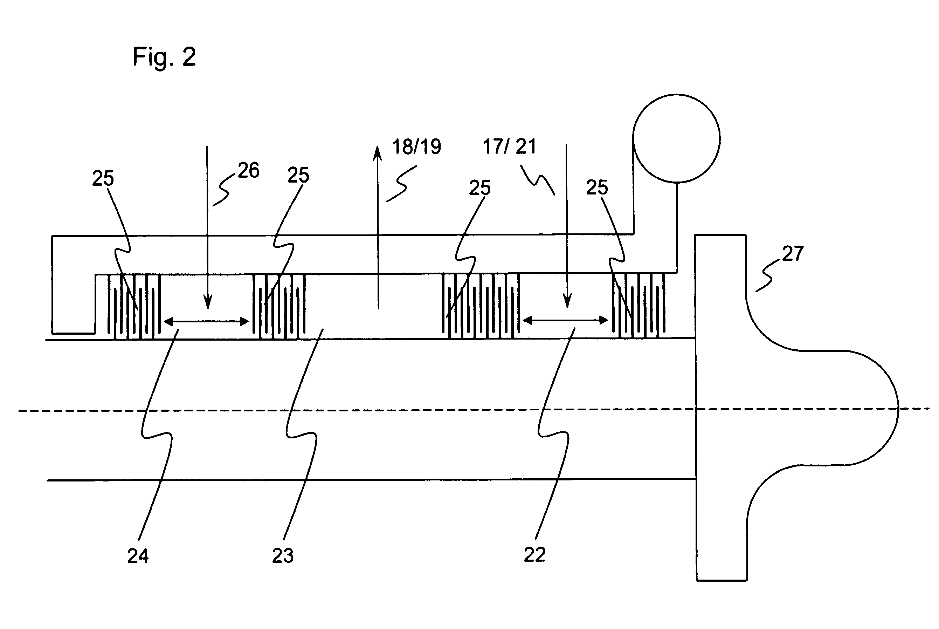

Fig. 2 zeigt eine Welle des jeweils gasbeaufschlagten Eingangs oder Ausgangs des NO-Kompressors (14, 15) oder des Restgasexpanders (12, 13) mit beispielhaft 3 Sperrkammern (22, 23, 24), die jeweils von Labyrinthdichtungen (25) von ihrer Umgebung abgrenzt werden. Das Restgas bestehend aus Teilstrom (21) wird in die jeweilige erste Sperrkammer (22) des NO-Kompressors (3) geleitet. Das Restgas bestehend aus Teilstroms (17) wird in die jeweilige erste Sperrkammer (22) des Restgasexpanders (11) geleitet. Aufgrund des erhöhten Drucks strömt der größte Teil des Sperrgases durch die zwischen Laufrad (27) und der jeweils ersten Sperrkammer (22) gelegene Labyrinthdichtung (25). Ein kleiner Teil des Sperrgases strömt durch die Labyrinthdichtung (25), die erste Sperrkammer (22) von der zweiten Sperrkammer (23) räumlich voneinander trennt und wird als Abgasstrom (18 oder 19) abgeführt. Dabei bezeichnet (18) den Abgasstrom aus der zweiten Sperrkammer des NO-Kompressors und (19) den Abgasstrom aus der zweiten Sperrkammer des Restgasexpanders.

Eine zusätzliche Dichtwirkung wird durch die Erweiterung mittels einer 3. Sperrkammer erzielt. Diese ist ebenfalls mit Labyrinthdichtungen gegen ihre Umwelt abgrenzt und wird mit Luft betrieben.

Vorteile, die sich aus der Erfindung ergeben:
- das entnommene Restgas besitzt bereits die erforderliche Temperatur zur optimalen Abdichtung des NO-Kompressors und/oder des Restgasexpanders
- das entnommene Restgas besitzt bereits den erforderlichen Druck zur optimalen Abdichtung des NO-Kompressors und/oder des Restgasexpanders
- durch Einhaltung der optimalen Temperatur und des optimalen Drucks des Restgases, das zur Sperrung der Geräte verwendet wird, kann eine sichere Abdichtung der Geräte gewährleistet werden
- es muss zur Sperrung der Geräte kein zusätzliches Gas eingespeist werden, wodurch eine ökonomische Betriebsweise der Anlage möglich wird.

### Bezugszeichenliste

- 1: Niederdruckteil
- 2: NO-Gas
- 3: NO-Kompressor
- 4: komprimiertes NO-Gas
- 5: Hochdruckteil
- 6: Restgas des Hochdruckteils
- 7: Wärmeaustauscher
- 8: Restgas des Wärmetauschers
- 9: Teilstrom 1 aus dem Wärmetauscher
- 10: Teilstrom 2 aus dem Wärmetauscher
- 11: Restgasexpander
- 12: mit Sperrkammern versehene gasbeaufschlagte Welle am Eingang des Restgasexpanders
- 13: mit Sperrkammern versehene gasbeaufschlagte Welle am Ausgang des Restgasexpanders
- 14: mit Sperrkammern versehene gasbeaufschlagte Welle am Eingang des NO-Kompressors
- 15: mit Sperrkammern versehene gasbeaufschlagte Welle am Ausgang des NO-Kompressors
- 16: Restgasstrom einer Zwischenstufe des Restgasexpanders
- 17: Teilstrom aus der Aufteilung von Restgasstrom 10 oder 16
- 18: Abgasstrom aus zweiter Sperrkammer des NO-Kompressors
- 19: Abgasstrom aus zweiter Sperrkammer des Restgasexpanders
- 20: Abgasstrom des Restgasexpanders
- 21: Teilstrom aus der Aufteilung von Restgasstrom 10 oder 16
- 22: erste Sperrkammer
- 23: zweite Sperrkammer
- 24: dritte Sperrkammer
- 25: Labyrinthdichtungen
- 26: Luft
- 27: Laufrad

## Patentansprüche

1. Verfahren zur Sperrung des NO-Kompressors und des Restgasexpanders in einer Anlage zur Herstellung von Salpetersäure nach dem Zweidruckverfahren, enthaltend
• ein Niederdruckteil,
• einen NO-Kompressor, wobei die Wellen des NO-Kompressors mittels mindestens 2 Sperrkammern gegenüber den gasbeaufschlagten Teilen gesperrt sind,
• ein Hochdruckteil mit Oxidation und Absorption,
• mindestens einen Wärmetauscher,
• einen Restgasexpander, wobei die Wellen des Restgasexpanders mittels mindestens 2 Sperrkammern gegenüber den gasbeaufschlagten Teilen gesperrt sind,
• die Sperrkammern sämtlich Labyrinthdichtungen aufweisen,
in welchem
(a) Ammoniak und komprimierte Luft in das Niederdruckteil der Salpetersäureanlage geleitet wird und dort Ammoniak mittels eines Katalysators zu NO und Wasser oxidiert wird,
(b) das entstehende NO teilweise zu NO₂ oxidiert wird,
(c) das entstehende NO- und NO₂-gesättigte Gas in den NO-Kompressor geleitet wird,
(d) das NO- und NO₂-komprimierte Gas in das Hochdruckteil der Salpetersäureanlage geleitet wird, wo eine Oxidation des restlichen NO zu NO₂ erfolgt, gefolgt von einer Absorption von Stickstoffdioxid zu Salpetersäure,
(e) das Restgas mindestens über einen Wärmetauscher in den Restgasexpander geleitet wird,
**dadurch gekennzeichnet, dass**
• sich die erste Sperrkammer jeweils neben dem gasbeaufschlagten Laufrad des Kompressors/Expanders befindet,
• ein Teil des Restgases nach dem Wärmetauscher abgezogen und in 2 Teilströme aufgeteilt wird,
• von denen der erste Teilstrom in die erste Sperrkammer des NO-Kompressors geleitet wird, und
• von denen der zweite Teilstrom in die erste Sperrkammer des Restgasexpanders geleitet wird, und
• der größte Teil des Restgases der beiden Teilströme aufgrund des höheren Druckniveaus durch die das gasbeaufschlagte Laufrad von der ersten Sperrkammer abtrennenden Labyrinthdichtung zum gasbeaufschlagten Laufrad gelangt
• das durch Undichtigkeiten der Labyrinthe aus der jeweils ersten Sperrkammer in die jeweils zweite Sperrkammer gelangende Restgas in den Abgasstrom des Restgasexpanders geleitet wird.

2. Verfahren nach Anspruch 1, **dadurch gekennzeichnet, dass** das für die Sperrkammern benötigte Restgas hinter dem Wärmetauscher dem Restgasstrang mit der benötigten Temperatur und dem benötigten Überdruck entnommen wird.

3. Verfahren nach Anspruch 1, **dadurch gekennzeichnet, dass** das für die Sperrkammern benötigte Restgas aus einer Zwischenstufe des Restgasexpanders mit der benötigten Temperatur und dem benötigten Überdruck entnommen wird.

4. Verfahren nach einem der Ansprüche 1 bis 3, **dadurch gekennzeichnet, dass** zur Dichtung des NO-Kompressors und/oder des Restgasexpanders eine dritte Sperrkammer vorgesehen wird, welche mit Luft als Sperrgas betrieben wird.

5. Anlage zur Herstellung von Salpetersäure nach dem Zweidruckverfahren, umfassend
• ein Niederdruckteil,
• einen NO-Kompressor, wobei die Wellen des NO-Kompressors mittels mindestens zwei Sperrkammern gegenüber den gasbeaufschlagten Teilen gesperrt sind und die Sperrkammern sämtlich Labyrinthdichtungen aufweisen,
• ein Hochdruckteil,
• mindestens einen Wärmetauscher,
• einen Restgasexpander, wobei die Wellen des Restgasexpanders mittels mindestens zwei Sperrkammern gegenüber den gasbeaufschlagten Teilen gesperrt sind und die Sperrkammern sämtlich Labyrinthdichtungen aufweisen,
• einer Vorrichtung zur Einleitung entstandenen NO-Gases in den NO-Kompressor,
• eine Vorrichtung zur Einleitung mit der das NO-Gas in das Hochdruckteil der Salpetersäureanlage gelangt,
• eine Vorrichtung, mit der das Restgas über einen Wärmeaustauscher in den Restgasexpander geleitet wird,
• eine Vorrichtung zum Abzug und zur Aufteilung eines Teils des Restgases in 2 Teilströme,
• Zuleitungen der beiden Teilströme zu den jeweils ersten Sperrkammern von Restgasexpander und NO-Kompressor, wobei sich die jeweils erste Sperrkammer, in die das Restgas geleitet wird, jeweils neben dem Laufrad, das von Labyrinthen abgedichtet wird, befindet, und
• Ableitungen von den zweiten Sperrkammern in den Abgasstrom des Restgasexpanders vorgesehen sind.

6. Vorrichtung nach Anspruch 5, **dadurch gekennzeichnet, dass** zur Dichtung des NO-Kompressors eine dritte Sperrkammer vorgesehen wird.

7. Vorrichtung nach Anspruch 5, **dadurch gekennzeichnet, dass** zur Dichtung des Restgasexpanders eine dritte Sperrkammer vorgesehen wird.

## Claims

1. Process for sealing the NO compressor and the residual gas expander in a plant for the production of nitric acid by the dual-pressure process, including
• a low-pressure section,
• a NO compressor, the shaft of the NO compressor being sealed by at least two sealing chambers against the gas-fed components,
• a high-pressure section with oxidation and absorption,
• at least one heat exchanger,
• a residual gas expander, the shaft of the residual gas expander being sealed by at least two sealing chambers against the gas-fed components,
• all sealing chambers being provided with labyrinth seals,
in which
(a) ammonia and compressed air are passed into the low-pressure section of the nitric acid plant, where ammonia is oxidised via a catalyst to yield NO and water,
(b) the obtained NO is partly oxidised to yield NO₂,
(c) the obtained NO- and NO₂-saturated gas is passed into the NO compressor,
(d) the NO- and NO₂- compressed gas is passed to the high-pressure section of the nitric acid plant where the residual NO is oxidised to yield NO₂, followed by absorption of nitrogen dioxide to nitric acid,
(e) the residual gas is routed to the residual gas expander via at least one heat exchanger,
**characterised in that**
• the first sealing chamber is located in each case beside the gas-fed impeller of the compressor/expander,
• part of the residual gas is withdrawn downstream of the heat exchanger and subdivided into two partial flows,
• the first partial flow being passed into the first sealing chamber of the NO compressor, and
• the second partial flow being passed into the first sealing chamber of the residual gas expander, and
• the major part of the residual gas of the two partial flows reaches the gas-fed impeller through the labyrinth seal separating the gas-fed impeller from the first sealing chamber owing to the higher pressure level
• the residual gas escaping from the respective first sealing chamber into the respective second sealing chamber due to leaks in the labyrinth seals is passed into the off-gas flow of the residual gas expander.

2. Process according to claim 1, **characterised in that** the residual gas required for the sealing chambers is withdrawn downstream of the heat exchanger from the residual gas line at the necessary temperature and the necessary gauge pressure

3. Process according to claim 1, **characterised in that** the residual gas required for the sealing chambers is withdrawn from an intermediate section of the residual gas expander at the necessary temperature and the necessary gauge pressure.

4. Process according to any of the claims 1 to 3, **characterised in that** a third sealing chamber is provided for sealing the NO compressor and/or the residual gas expander, which is operated with air as sealing gas.

5. Plant for the production of nitric acid by the dual-pressure process, comprising
• a low-pressure section
• a NO compressor, the shaft of the NO compressor being sealed by at least two sealing chambers against the gas-fed components and all sealing chambers being provided with labyrinth seals,
• a high-pressure section
• at least one heat exchanger
• a residual gas expander, the shaft of the residual gas expander being sealed by at least two sealing chambers against the gas-fed components and all sealing chambers being provided with labyrinth seals,
• a device for feeding the NO gas obtained into the NO compressor,
• a feeding device by which the NO gas is introduced into the high-pressure section of the nitric acid plant,
• a device by which the residual gas is passed via a heat exchanger into the residual gas expander,
• a device for withdrawing and subdividing part of the residual gas into two partial flows
• feed flows of the two partial flows to the respective first sealing chambers of residual gas expander and NO compressor, wherein the respective first sealing chamber into which the residual gas is introduced is located in each case beside the impeller which is sealed by labyrinth seals, and
• and off-gas lines are provided from the second sealing chambers into the off-gas flow of the residual gas expander.

6. Device according to claim 5, **characterised in that** a third sealing chamber is provided for sealing the NO compressor.

7. Device according to claim 5, **characterised in that** a third sealing chamber is provided for sealing the residual gas expander.

## Revendications

1. Procédé pour bloquer le compresseur NO et le détendeur de gaz résiduel dans une installation de fabrication d'acide nitrique d'après la distillation à pression alternée, comprenant
• une partie basse pression,
• un compresseur NO dont les arbres sont bloqués par au moins 2 chambres de barrage situées en face des parties alimentées au gaz,
• une partie haute pression avec oxydation et absorption,
• au moins un échangeur thermique,
• un détendeur de gaz résiduel dont les arbres sont bloqués par au moins 2 chambres de barrage situées en face des parties alimentées au gaz,
• les chambres de barrage présentant toutes des joints à labyrinthe,
dans lequel
(a) l'ammoniac et l'air comprimé sont dirigés dans la partie basse pression de l'installation d'acide nitrique où l'ammoniac est oxydé en NO et en eau au moyen d'un catalyseur,
(b) le NO formé est partiellement oxydé en NO₂,
(c) le gaz saturé en NO et NO₂ est dirigé dans le compresseur NO,
(d) le gaz comprimé NO et NO₂ est dirigé dans la partie haute pression de l'installation d'acide nitrique, où le NO résiduel est oxydé en NO₂, puis le dioxyde d'azote est absorbé en acide nitrique,
(e) le gaz résiduel est dirigé dans le détendeur de gaz résiduel via au moins un échangeur thermique,
**caractérisé en ce que**
• la première chambre de barrage se trouve respectivement à côté de la roue alimentée en gaz du compresseur/détendeur,
• une partie du gaz résiduel est soutirée après l'échangeur thermique et divisée en 2 flux partiels,
• dont le premier flux partiel est dirigé dans la première chambre de barrage du compresseur NO et
• dont le second flux partiel est dirigé dans la première chambre du détendeur du gaz résiduel et
• la plupart du gaz résiduel des deux flux partiels passe, en raison du niveau élevé de la pression, par le joint à labyrinthe séparant la roue alimentée en gaz de la première chambre de barrage pour arriver à la roue alimentée en gaz
• le gaz résiduel passant de la première chambre de barrage dans la seconde via les fuites des labyrinthes est dirigé dans le flux d'échappement du détendeur de gaz résiduel.

2. Procédé selon la revendication 1, **caractérisé en ce que** le gaz résiduel nécessaire pour les chambres de barrage est prélevé derrière l'échangeur thermique de la ligne du gaz résiduel à la température nécessaire et avec la pression relative nécessaire.

3. Procédé selon la revendication 1, **caractérisé en ce que** le gaz résiduel nécessaire pour les chambres de barrage est prélevé à un niveau intermédiaire du détendeur gaz résiduel à la température nécessaire et avec la pression relative nécessaire.

4. Procédé selon une des revendications 1 à 3, **caractérisé en ce qu'**une troisième chambre de barrage est prévue comme joint d'étanchéité du compresseur NO et/ou du détendeur de gaz résiduel, laquelle utilise l'air comme gaz de barrage.

5. Installation de fabrication d'acide nitrique d'après la distillation à pression alternée, comprenant
• une partie basse pression,
• un compresseur NO dont les arbres sont bloqués par au moins deux chambres de barrage situées en face des parties alimentées au gaz et présentant toutes des joints à labyrinthe,
• une partie haute pression,
• au moins un échangeur thermique,
• un détendeur de gaz résiduel dont les arbres sont bloqués par au moins deux chambres de barrage situées en face des parties alimentées au gaz et présentant toutes des joints de labyrinthe,
• un dispositif d'introduction du gaz NO en formation dans le compresseur NO,
• un dispositif d'introduction par lequel le gaz NO arrive dans la partie haute pression de l'installation d'acide nitrique,
• un dispositif par lequel le gaz résiduel est dirigé dans le détendeur de gaz résiduel via un échangeur thermique,
• un dispositif d'extraction et de séparation d'une partie du gaz résiduel en 2 flux partiels,
• des tubes d'amenée des deux flux partiels vers les premières chambres de barrage du détendeur de gaz résiduel et du compresseur NO, la première chambre de barrage respective recevant le gaz résiduel étant toujours située à côté de la roue étanchée par des labyrinthes et
• des tubes d'évacuation depuis les secondes chambres de barrage dans le flux d'échappement du détendeur de gaz résiduel.

6. Dispositif selon la revendication 5, **caractérisé en ce qu'**une troisième chambre de barrage est prévue comme joint d'étanchéité du compresseur NO.

7. Dispositif selon la revendication 5, **caractérisé en ce qu'**une troisième chambre de barrage est prévue comme joint d'étanchéité du détendeur de gaz.
